# EUROPEAN PATENT SPECIFICATION

(11) **EP 0 877 679 B1**
(45) Date of publication and mention of the grant of the patent: **13.10.1999**
(21) Application number: 96938393.4
(22) Date of filing: 19.11.1996
(51) Int. Cl.: B60R 7/06

(54) **STORAGE UNIT**
STAURAUM
UNITE DE RANGEMENT

(30) Priority: 01.02.1996 GB 9602010
(43) Date of publication of application: 18.11.1998
(73) Proprietor: FORD MOTOR COMPANY LIMITED, Brentwood, Essex CM13 3BW (GB); FORD-WERKE AKTIENGESELLSCHAFT, 50735 Köln (DE); FORD FRANCE S. A., 92506 Rueil-Malmaison Cédex (FR); FORD MOTOR COMPANY, Dearborn, MI 48126 (US)
(72) Inventor: CONDON, Alan, Richard, East Hanningfield, Essex CM3 8XA (GB)
(74) Representative: Messulam, Alec Moses
(86) International application number: GB9602841
(87) International publication number: WO9728023

(56) References cited:
- DE-A- 2 427 015
- DE-A- 2 941 243
- DE-A- 4 309 620
- DE-U- 9 209 890
- DE-U- 9 401 228
- GB-A- 2 136 367
- GB-A- 2 247 654
- US-A- 3 177 033
- US-A- 4 809 897

## Description

### Field of the invention

The invention relates to a storage unit for a vehicle, which is applicable with particular advantage to bins replacing the traditional glovebox which appears on the passenger side of a vehicle.

### Background of the invention

The increasing use of passenger side airbags in vehicles has resulted in the loss of a large amount of space traditionally used for storage. After a passenger side airbag has been fitted, although there may be some storage space remaining, there is no room for the traditional glovebox. Storage space is thus at a premium.

Traditionally, the glovebox is used to store a number of items such as the vehicle handbook, maps, papers, coins, sunglasses and wallets. It is in a convenient position since it is readily accessible by the driver. The loss of this storage space is inconvenient.

It is common for vehicles to include a number of different small storage areas often tailored for holding different articles. For instance, many cars now have a space for holding coins, pens or keys. However, these still do not satisfy the storage requirements of many drivers.

It is already known from DE-U-94 01 228 to provide a storage unit for a vehicle comprising a storage body defining a primary storage space and including an access opening, and a lid for closing the access opening, mountable on the storage body by mounting means, the mounting means including pivoting means to allow the lid to pivot between a closed and an open position and releasable positive location means for retaining the lid in a closed position and the lid comprising a secondary housing, defining a secondary storage space and including closable access means for access into the secondary storage space.

GB-A-2 136 367 discloses a glovebox, which can be closed by a cover, is arranged in the instrument panel of a motor vehicle and can be removed in its entirety from the opening accommodating it in the instrument panel, to allow access for access to devices in the instrument panel arranged behind the glovebox. In one of the described embodiments, the glovebox 4 is entirely removable from the instrument panel and can be designed as a suitcase to be readily taken along as a container for valuables by the driver when leaving the vehicle.

### Summary of the invention

According to the invention there is provided a storage unit for a vehicle comprising a storage body defining a primary storage space and including an access opening, and a lid for closing the access opening, mountable on the storage body by mounting means, the mounting means including pivoting means to allow the lid to pivot between a closed and an open position and releasable positive location means for retaining the lid in a closed position and the lid comprising a secondary housing, defining a secondary storage space and including closable access means for access into the secondary storage space, characterised in that the pivoting means are also releasable to allow removal of the lid from the vehicle and in that the lid is arranged such that it is mountable upon the storage body in at least two different orientations, the first orientation being such that a first face faces outwards into the vehicle, and in which orientation access to the secondary storage space within the lid is not possible and the second orientation being such that the opposite face faces outwards into the vehicle in which orientation access to the secondary storage space is permitted.

This arrangement provides two storage areas. The primary area is the one which will usually be permanently mounted in the vehicle, or the storage body may be formed by a recess provided in the instrument panel of the vehicle. The secondary area is provided within the lid for the storage body. This utilises the maximum amount of space, and has the advantage that the driver can place valuables in the lid which can then be removed from the vehicle when he leaves.

The driver can place his valuables in the secondary storage space within the lid and mount the lid in the second orientation upon the storage body whilst he is driving. Thus if he needs access to those articles he can get them. When leaving the vehicle he can remove the lid to take the valuables away with him. Alternatively, he can reverse the lid into its first orientation to prevent ready access to the secondary storage space.

It is preferred that the opposite faces of the lid have appearances different from each other for easy recognition by the driver. Preferably the first face, which faces outwards in the first orientation is plain or patterned to match the rest of the vehicle interior. For security reasons, it is preferred that the first face is arranged such that there is no suggestion that the lid is anything more than a standard closure for the primary storage space, as would be expected. On the opposite face, which faces outwards and is accessible in the second orientation may be positioned notches or slots for holding items; or clips which can be used to retain tickets or other papers which may be required quickly.

The pivoting means may be provided by the storage body and lid each having cooperating shoulders providing seating for the lid upon the storage body which allows the lid edge to be loosely held while still allowing pivoting. Alternatively the lid may be mounted to the storage body by a magnet which will allow the lid to pivot with respect to the body. Both pivoting means are releasable so that the lid is removable from the body. A choice of releasable, positive location means will be apparent to the skilled addressee of the specification. Typically, a catch on the lid will clip into a depression in the body to provide the positive location means.

Preferably the secondary storage housing includes within it a number of compartments which are tailored to hold specific articles such as sunglasses. In this case, articles can be held snugly in position when the lid is used as a carrying compartment for its contents.

More preferably, the lid is arranged so that it defines two interior storage spaces, with the first secondary storage space being accessible when the lid is in position on the storage body and the second secondary storage space being accessible only when the lid has been removed from the storage body. Articles which can suitably be placed there are for example pads of paper or notebooks, where the user will not want to write on the pad whilst the pad is sitting on top of the storage body. The user will want to use the pad when the lid has been moved to a suitable place for writing.

Preferably the lid comprises a lightweight plastics material, of a polymer such as polypropylene which can be moulded with areas of thinner cross section to form live hinges.

The lid typically includes at least one live hinge between the lid and the closure door for the access opening into the secondary storage space. In the case where the lid defines two storage spaces, conveniently the lid includes three substantially parallel live hinges to allow access into each of the storage spaces.

### Brief description of the drawings

A storage unit for a vehicle in accordance with the invention will now be described, by way of example only, with reference to the accompanying drawings, in which : -
Figure 1 is a schematic section illustrating the storage unit in the vehicle;
Figure 2 is a section through the storage unit position with the lid mounted upon the storage body in a closed position closing the primary storage unit and in its first orientation;
Figure 3 is a section through the storage unit with the lid mounted upon the storage body in a closed position, closing the primary storage space and in its second orientation;
Figure 4 is a section through the storage unit in which the lid is mounted upon the storage body in a closed position closing the primary stowage space in its second orientation and in which the access means of the lid is open allowing access into the secondary storage space;
Figure 5 is a plan view of the lid in its second orientation, and
Figure 6 is a sectional elevation of the lid opened out to illustrate the different storage areas within it.

### Detailed description of the preferred embodiment

A storage unit 1 for a vehicle 3 comprises a storage body 5 defining a primary storage space 7 and including an access opening 9. A lid 11 is mountable on the storage body 5 to close the access opening 9 by mounting means 13. Mounting means 13 includes pivoting means 15 to allow the lid to pivot between a closed and an oven position, and releasable positive location means 17 for retaining the lid 11 in a closed position. The pivoting means 15 are also releasable to allow removal of the lid 11 from the vehicle. The lid 11 comprises a secondary storage housing defining a secondary storage space 19 and including access means 21 for access into the secondary storage space 19.

In this case the storage body 5 comprises a U-section bin 23 permanently secured to the vehicle 3 in a position readily accessible by the driver, via fastenings 25.

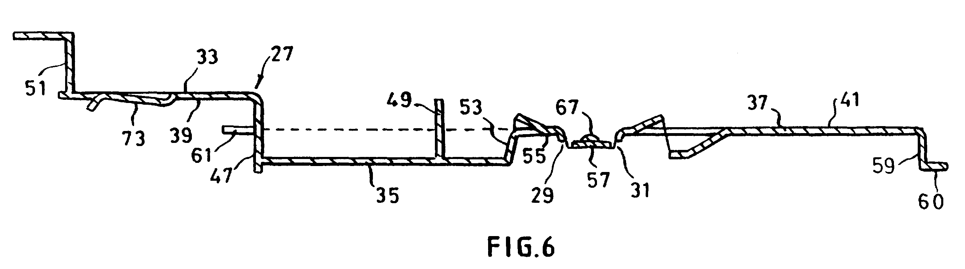

As illustrated in Figure 6 of the drawings, the lid 11 is a one piece moulding of polypropylene. It is shown opened out in this view, which is a sectional elevation which shows that the lid 11 does not have constant cross section. The lid 11 has three substantially parallel hinges 27. 29 and 31. These are formed integrally by moulding thin bands of thinner cross section into the lid 11, producing live hinges.

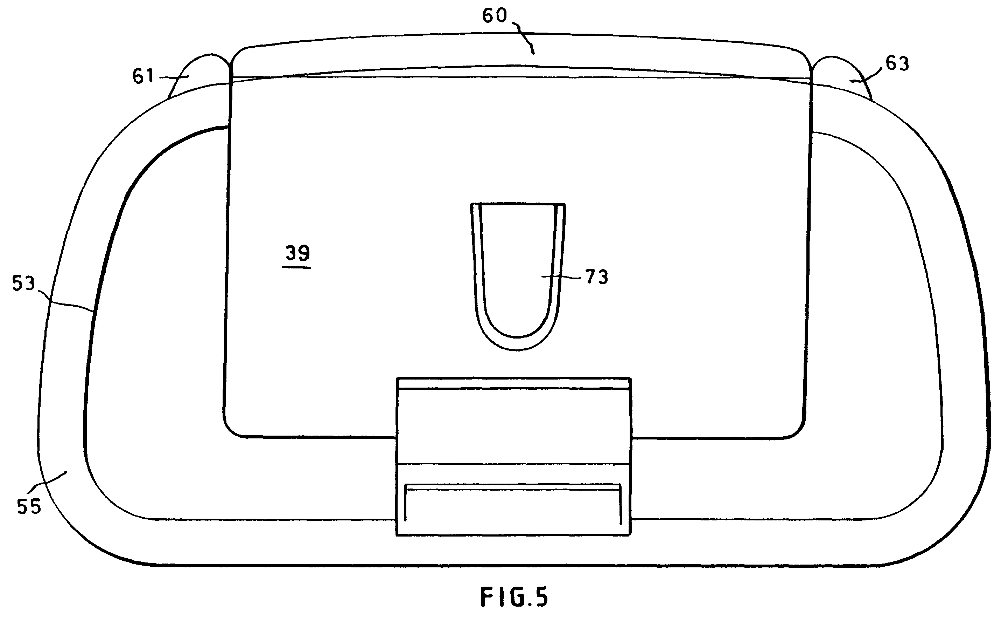

For convenience, references will now be made to the front, back and sides of the lid 11. These references apply to the position of those parts when in the position shown in Figure 5, where the bottom of the figure is viewed as the front of the lid 11.

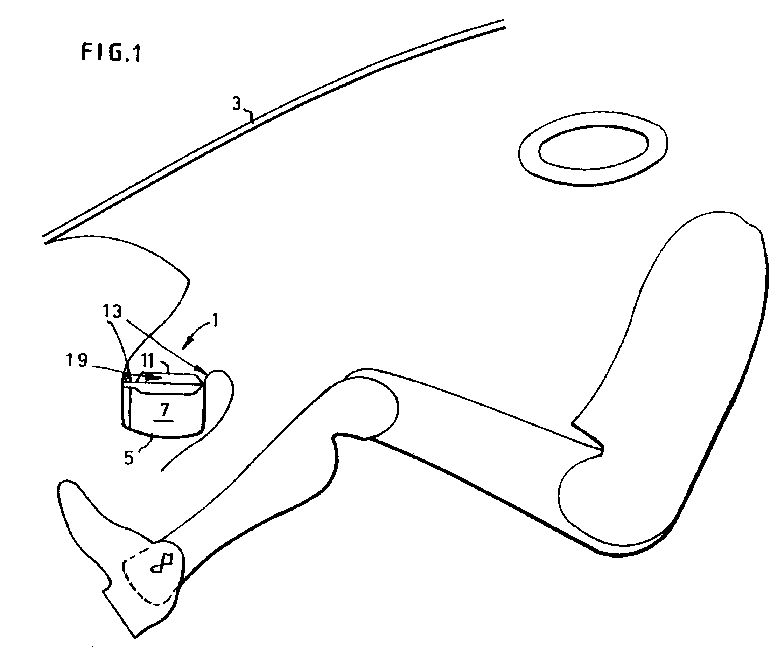

The lid 11 essentially comprises three planar members 33, 35 and 37, which, when the lid is in its fully closed condition (as illustrated in Figures 1 to 3), lie substantially mutually parallel. The lid folds into an 'S' with face 39 of member 33, and face 41 of member 37 forming the outer surfaces.

Defined within the closed lid 11 are two storage spaces, 43 and 45 which together comprise the secondary storage space 19. The first secondary storage space 43 is defined between members 33 and 35, and the second secondary storage space 45 is defined between members 35 and 37. Upright members 47 and 49 define the front and rear walls of the first secondary storage space 43. The side walls are not illustrated. Member 33 is attached to upright member 47 via hinge 27, to form closable access means 21 into the storage space 43. An L-shaped flange 51 projects from the front and side edges of the planar member 33. A third upright member 53 projects from the edge of member 35 remote from the hinged edge 27, the depth of the third upright 53 being less than that of members 47 and 49. Member 53 runs around the periphery Of member 35 extending between the opposite ends of wall 47. The periphery is clearly shown in Figure 5 of the drawings. As can be seen the width and length of member 35 is greater than that of member 33.

Extending from peripheral uptight 53 is skirt 55 which extends around the side and front of the first compartment 43. The majority of the skirt 55 is planar but in the central portion is a handle area which will be described in more detail separately. Hinge 29 pivotably connects front wall 57 to the front edge of skirt 55. Front wall 57 is connected to member 37 via hinge 31. Member 37 includes a peripheral flange 59 which forms the rear and side walls of the second secondary space 45. Extending from the central region of the rear edge of the flange 59 is tongue 60. The rear edge of the skirt 55 includes two tongues 61 and 63 which extend at either side of the tongue 60 such that when in its closed position, the rear edge of the lid 11 defined one tongue 61/60/63. The tongues form part of the pivoting means 15, as will now be described. The position of the bin 23 can be seen in Figure 1. It is in the usual position of a glove box, i.e. in front of the passenger, but below the passenger air bag. The lid 11 can be mounted to close the opening 9 to the primary stowage space 7 as shown in Figures 1 to 3.

The bin 23 includes a projection which forms a central shoulder 65 shown in the drawings. When the lid is to be mounted on the storage body 5 the uppermost face of tongue 60 bears against shoulder 65. At the edges of the bin 23 are shoulders which are not shown, against which the lower faces of tongues 61 and 63 bear. These shoulders and tongues together form pivoting means, since the lid 11 may rotate about shoulder 65 to allow the lid to be lifted from its closed position to a position in which access to the primary storage space 7 is permitted. The pivoting means IS are also releasable since the tongues can be slid from between the shoulders to allow removal.

Positive location means 17 comprises a part-spherical projection 67 extending from front wall 57 of the lid 11 which engages in a depression 69 in storage body 5. The resilience provided by the hinged areas 29 and 31 allows for easy release of the location means 17 for removal of the lid 11.

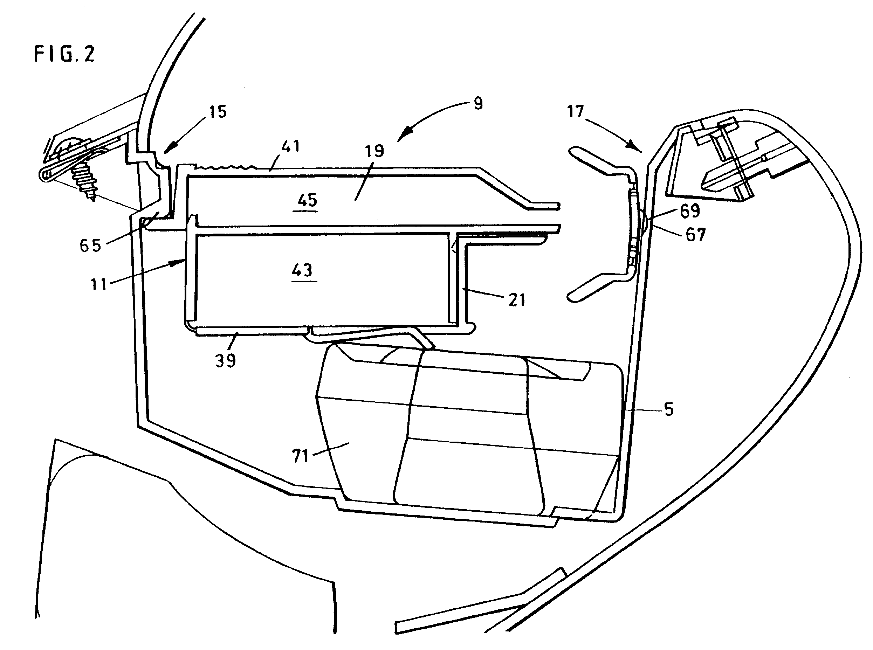

The lid 11 may be mounted on the storage body 5 in two orientations. The first orientation being shown in Figure 2. In this orientation face 41 of the lid faces outwards into the vehicle 3 and second secondary storage space 45 is outermost. The closure to space 45 includes flange 59 coupled to tongue 60, which is tucked under shoulder 65. Thus when in this orientation there is no access to the secondary storage space 19.

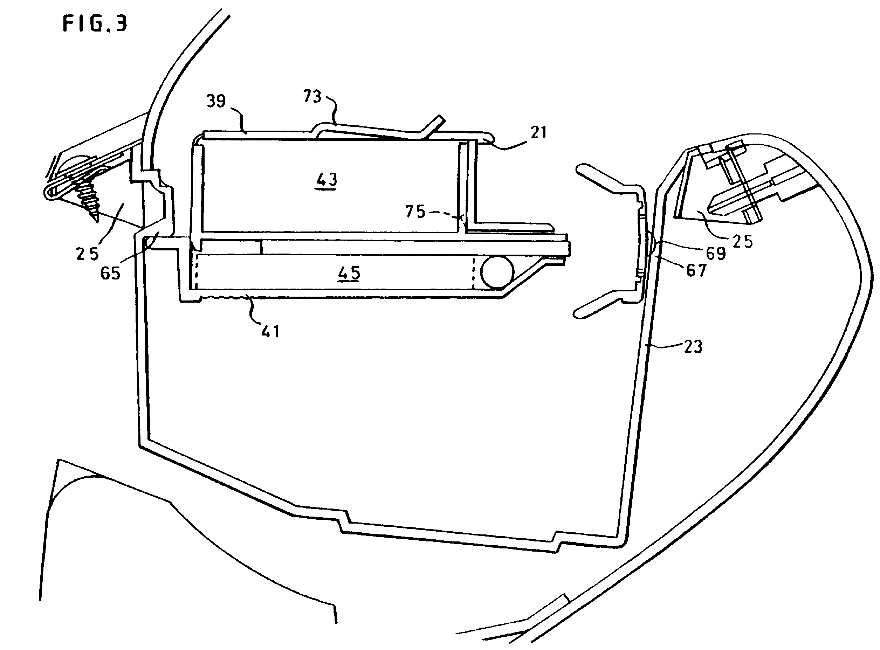

The face 41 is plain or patterned to match the decor of the vehicle, i.e. such as to give no suggestion that the lid 11 is a non-standard unit. In Figure 2, the storage body 5 is shown holding a mobile telephone 71 in a holder. If a driver were to leave this in the vehicle while he was not present, the contents would be well hidden. The lid may be mounted in its second orientation as shown in Figure 3. In this orientation, the face 39 faces outwards into the vehicle and first secondary storage space 43 is outermost. The face 39 includes a clip 73 for holding tickets or any papers which the driver may need quickly. The lid 21 may be opened when the lid is in this orientation to allow access into the first secondary storage space 43. The lid 21 may be kept closed by catch 75 which engages in a depression (not shown).

The lid 11 includes a number of shaped compartments intended to house specific articles.

The first secondary storage space 43 is shaped to accommodate sunglasses, items which may typically he required by a driver whilst driving, it is therefore convenient for the items to be stored where they can be accessed easily if the lid has been mounted in its second orientation.

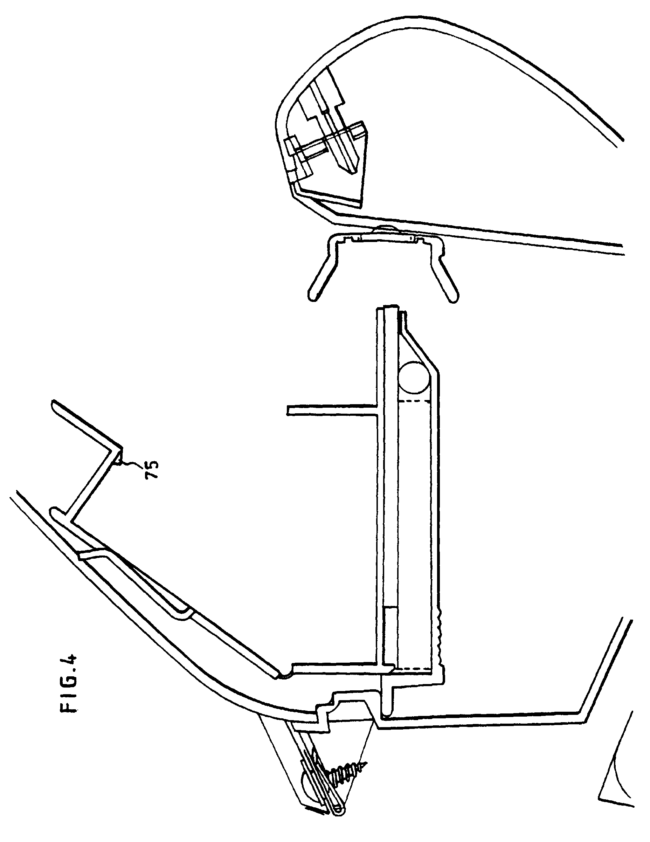

The second secondary storage space 45 is shaped to hold papers, such as a vehicle hand book, a pad and a pen. None of these items should be needed by the driver while he is driving, and so it is most convenient to remove the lid 11 from the storage body before accessing these items. At the central part of the front edge of the lid 11 is handle 77. This is formed by moulding the skirt 55 and the member 37 to define a hand hold. It is for this reason that the lid appears to be of two parts as shown in Figures 2 to 4, rather than the one piece moulding shown in Figure 6. The lid 11 is shaped and sized as to be readily portable for ready removal by the driver when required.

## Claims

1. A storage unit (1) for a vehicle (3) comprising a storage body (5) defining a primary storage space (7) and including an access opening (9), and a lid (11) for closing the access opening (9), mountable on the storage body (5) by mounting means (13), the mounting means (13) including pivoting means (15) to allow the lid (11) to pivot between a closed and an open position and releasable positive location means (17) for retaining the lid (11) in a closed position and the lid (11) comprising a secondary housing, defining a secondary storage space (19) and including closable access means (21) for access into the secondary storage space (19), characterised in that the pivoting means (15) are also releasable to allow removal of the lid (11) from the vehicle and in that the lid (11) is arranged such that it is mountable upon the storage body (5) in at least two different orientations, the first orientation being such that a first face (41) faces outwards into the vehicle (3), and in which orientation access to the secondary storage space (19) within the lid (11) is not possible and the second orientation being such that the opposite face (39) faces outwards into the vehicle (3) in which orientation access to the secondary storage space (19) is permitted.

2. A storage unit according to claim 1, in which the opposite faces (39, 41) of the lid (11) have appearances different from each other.

3. A storage unit according to claim 1 or 2, in which the appearance of at least one face (41) of the lid (11) gives no suggestion that the lid is not a standard closure for a storage bin.

4. A storage unit according to any one of the preceding claims in which the secondary storage housing includes within it a number of compartments tailored to hold specific articles.

5. A storage unit according to any one of the preceding claims in which, the lid is arranged so that it defines two interior storage spaces, with the first secondary storage space (43) being accessible when the lid (11) is in position on the storage body (3) and the second secondary storage space (45) being accessible only when the lid (11) has been removed from the storage body (5).

6. A storage unit according to any one of the preceding claims, in which the lid (11) comprises a mouldable lightweight plastics material.

7. A storage unit according to claim 6, in which the lid (11) is moulded to include at least one line of thinner cross section to form a live hinge (27) between the lid body and the access door (21) forming closable access means to the secondary storage space (19).

8. A storage unit according to any one of the preceding claims, in which the lid (11) includes a handle (77) and is readily portable.

## Patentansprüche

1. Ablageeinheit (1) für ein Fahrzeug (3) mit einem Ablagegehäuse (5), welches einen Primärablageraum (7) bildet und eine Zugangsöffnung (9) aufweist sowie einen Deckel (11) zum Verschliessen der Zugangsöffnung (9), welcher am Ablagegehäuse (5) mittels Montagemitteln (13) angebracht werden kann, wobei die Montagemittel (13) Schwenkgelenkmittel (15) aufweisen, durch die der Deckel zwischen einer geschlossenen und einer geöffneten Stellung verschwenkt werden kann, sowie lösbare Arretiermittel (17), welche den Deckel (11) in einer geschlossenen Stellung halten, und wobei der Deckel (11) ein Sekundärgehäuse beinhaltet, welches einen Sekundärablageraum (19) bildet und verschließbare Zugangsmittel (21) für den Zugang zu dem Sekundärablageraum (19) aufweist,
dadurch gekennzeichnet, daß die Schwenkgelenkmittel (15) ebenfalls lösbar sind, so daß sie eine Abnahme des Deckels (11) aus dem Fahrzeug erlauben, und daß der Deckel (11) so angeordnet ist, daß er am Ablagegehäuse (5) in wenigstens zwei unterschiedlichen Stellungen angebracht werden kann, wobei die erste Stellung derart ist, daß eine erste Stirnfläche (41) nach außen in das Fahrzeug (3) gekehrt ist, und in welcher Stellung der Zugang zum Sekundärablageraum (19) im Deckel (11) nicht möglich ist, und wobei die zweite Stellung derart ist, daß die gegenüberliegende Stirnfläche (39) nach außen in das Fahrzeug gekehrt ist, und welcher Stellung ein Zugang zum Sekundärablageraum (19) möglich ist.

2. Ablageeinheit nach Anspruch 1, in welcher die gegenüberliegenden Stirnflächen (39, 41) des Deckels (11) von einander unterschiedliche Erscheinungsbilder haben.

3. Ablageeinheit nach Anspruch 1 oder 2, in welcher das Erscheinungsbild wenigstens einer Stirnfläche (41) des Deckels (11) keinerlei Anzeichen dafür gibt, daß der Deckel kein Standarddeckel für ein Ablagefach ist.

4. Ablageeinheit nach einem beliebigen der vorangehenden Ansprüche, in welchem das Sekundärablagegehäuse eine Reihe von Abteilen beinhaltet, die zur Aufnahme spezifischer Artikel maßgeschneidert sind.

5. Ablageeinheit nach einem beliebigen der vorangehenden Ansprüche, in welchem der Deckel so angeordnet ist, daß er zwei innere Ablageräume bildet, wobei der erste Sekundärablageraum (43) zugänglich ist, wenn der Deckel (11) auf dem Ablagegehäuse (3) positioniert ist, und der zweite Sekundärablageraum (45) nur dann zugänglich ist, wenn der Deckel (11) vom Ablagegehäuse (5) abgenommen worden ist.

6. Ablageeinheit nach einem beliebigen der vorangehenden Ansprüche, in welchem der Deckel (11) aus formgießbarem leichtem Kunststoff besteht.

7. Ablageeinheit nach Anspruch 6, in welchem der Deckel (11) derart geformt ist, daß er wenigsten eine Linie dünneren Querschnittes beinhaltet, so daß diese ein Faltscharnier (27) zwischen dem Deckelkörper und der Zugangsklappe (21) bildet, welche so verschließbare Zugangsmittel zum zweiten Sekundärablageraum (19) bildet.

8. Ablageeinheit nach einem beliebigen der vorangehenden Ansprüche, in welchem der Deckel (11) einen Griff (77) beinhaltet und leicht tragbar ist.

## Revendications

1. Ensemble de rangement (1) destiné à un véhicule (3) comprenant un corps de rangement (5) définissant un espace de rangement principal (7) et comprenant une ouverture d'accès (9), ainsi qu'un couvercle (11) destiné à fermer l'ouverture d'accès (9) pouvant être monté sur le corps de rangement (5) à l'aide de moyens de montage (13), les moyens de montage (13) comprenant un moyen de pivotement (15) afin de permettre au couvercle (11) de pivoter entre une position fermée et une position ouverte, ainsi qu'un moyen de positionnement forcé libérable (17) destiné à retenir le couvercle (11) en position fermée, et le couvercle (11) constituant un logement secondaire, définissant un espace de rangement secondaire (19) et comprenant un moyen d'accès rechargeable (21) permettant à l'espace de rangement secondaire (19), caractérisé en ce que les moyens de pivotement (15) peuvent également être libérés afin de permettre l'enlèvement du couvercle (11) depuis le véhicule et en ce que le couvercle (11) est conçu de façon qu'il puisse être monté sur le corps de rangement (5) suivant au moins deux orientations différentes, la première orientation étant telle qu'une première face (41) est orientée vers l'intérieur du véhicule (3), et dans laquelle orientation l'accès à l'espace de rangement secondaire (19) à l'intérieur du couvercle (11) n'est pas possible, et la seconde orientation étant telle que la face opposée (39) est orientée vers l'intérieur du véhicule (3), dans laquelle orientation un accès à l'espace de rangement secondaire (19) est permis.

2. Ensemble de rangement selon la revendication 1, dans lequel les faces opposées (39, 41) du couvercle (11) présentent des aspects différents l'un de l'autre.

3. Ensemble de rangement selon la revendication 1 ou 2, dans lequel l'aspect d'au moins une face (41) du couvercle (11) ne donne aucune indication de ce que le couvercle n'est pas une fermeture standard d'un bac de rangement.

4. Ensemble de rangement selon l'une quelconque des revendications précédentes, dans lequel le logement de rangement secondaire comprend à l'intérieur de celui-ci un certain nombre de compartiments adaptés de façon à contenir des articles particuliers.

5. Ensemble de rangement selon l'une quelconque des revendications précédentes, dans lequel le couvercle est agencé de façon qu'il définisse deux espaces intérieurs de rangement, le premier espace de rangement secondaire (43) étant accessible lorsque le couvercle (11) se trouve en position sur le corps de rangement (3) et le second espace de rangement secondaire (45) étant accessible uniquement lorsque le couvercle (11) a été enlevé du corps de rangement (5).

6. Ensemble de rangement selon l'une quelconque des revendications précédentes, dans lequel le couvercle (11) comprend une matière plastique moulable de faible poids.

7. Ensemble de rangement selon la revendication 6, dans lequel le couvercle (11) est moulé de façon à comprendre au moins une ligne de section transversale plus mince afin de former une charnière élastique (27) entre le corps du couvercle et la porte d'accès (21) formant le moyen d'accès refermable à l'espace de rangement secondaire (19).

8. Ensemble de rangement selon l'une quelconque des revendications précédentes, dans lequel le couvercle (11) comprend une poignée (17) et est facilement transportable.
